(19) Europäisches Patentamt
European Patent Office
Office européen des brevets

(11) Veröffentlichungsnummer: **0 011 873**
**B1**

(12) # EUROPÄISCHE PATENTSCHRIFT

(45) Veröffentlichungstag der Patentschrift: **01.07.81**

(51) Int. Cl.³: **C 09 B 45/36**, C 09 B 45/28, C 09 B 43/16

(21) Anmeldenummer: **79104801.0**

(22) Anmeldetag: **01.12.79**

(54) **Polyazofarbstoffe, deren Herstellung und Verwendung zum Färben von Cellulosematerialien.**

(30) Priorität: **01.12.78 DE 2852026**

(43) Veröffentlichungstag der Anmeldung: **11.06.80 Patentblatt 80/12**

(45) Bekanntmachung des Hinweises auf die Patenterteilung: **01.07.81 Patentblatt 81/26**

(84) Benannte Vertragsstaaten: **BE CH DE FR GB IT**

(56) Entgegenhaltungen:
**DE-B-1 295 365**
**FR-A-1 411 276**
**GB-A-907 983**
**US-A-1 808 849**

(73) Patentinhaber: **BAYER AG, Zentralbereich Patente, Marken und Lizenzen, D-5090 Leverkusen 1, Bayerwerk (DE)**

(72) Erfinder: **Henk, Hermann, Dr., Roggendorfstrasse 55, D-5000 Köln 80 (DE)**
Erfinder: **Schündehütte, Karl Heinz, Klief 75, D-5090 Leverkusen 3 (DE)**
Erfinder: **Nickel, Horst, Dr., Fontanestrasse 23, D-5090 Leverkusen 1 (DE)**
Erfinder: **Kunde, Klaus, Dr., Auf dem Uppersberg A66, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Polyazofarbstoffe, deren Herstellung und Verwendung zum Färben von Cellulosematerialien

Die vorliegende Erfindung betrifft neue, metallhaltige Polyazofarbstoffe, die in Form der freien Säure der Formel (1)

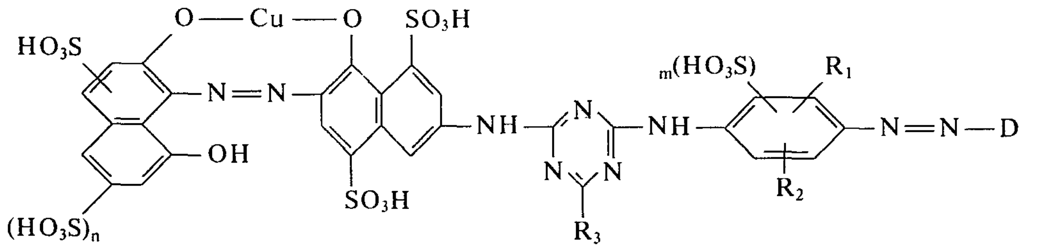

(1)

entsprechen, worin

D Rest der Benzol- oder Naphthalinreihe,

$R_1$ und $R_2$ unabhängig voneinander Wasserstoff, $C_1-C_4$-Alkyl, $C_1-C_4$-Alkoxy, Halogen, Carboxy, Hydroxy, Acylamino wie Aminocarbonylamino und insbesondere $C_1-C_4$-Alkylcarbonylamino, $C_1-C_4$-Alkylsulfonylamino, Arylcarbonylamino, insbesondere Benzoylamino, Arylsulfonylamino, insbesondere Benzolsulfonylamino, Acyloxy, insbesondere $C_1-C_4$-Alkylcarbonyloxy oder Arylcarbonyloxy, insbesondere Benzoyloxy bedeuten,

$R_3$ ein nicht faserreaktiver Substituent,

n 0 oder 1 und

m 0 oder 1 ist.

Die Alkyl-, Alkoxy-, Aryl- (insbesondere Phenyl)reste können gegebenenfalls weitersubstituiert sein. Der Rest D kann weitere Azogruppen enthalten, z. B. gegebenenfalls substituierte Phenylazo- oder Naphthylazogruppen.

Geeignete Substituenten $R_3$ sind beispielsweise Aminogruppen wie

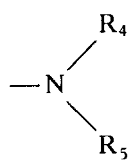

oder Gruppen $-OR_3$ oder $-S-R_6$,

worin

$R_4$ und $R_5$ unabhängig voneinander Wasserstoff, Amino, niedermolekulares Alkyl, Aryl, Aralkyl oder Cycloalkyl bedeuten oder zusammen, gegebenenfalls unter Einschluß eines oder mehrerer Heteroatome insbesondere Sauerstoff und/oder Stickstoff, einen Ring bilden, insbesondere einen 5- oder 6gliedrigen, und

$R_6$ für Wasserstoff, niedermolekulares Alkyl, Aryl oder Aralkyl steht.

Die Alkyl-, Aryl- oder Aralkyl-Reste können übliche Substituenten aufweisen.

Besonders zu erwähnende Substituenten $R_3$ sind:

N-Methyl-(2-hydroxyäthyl)-amino, Amino-, Methylamino-, Dimethylamino-, Äthylamino-, Diäthylamino-, 2-Hydroxyäthylamino-, Bis-(2-hydroxyäthyl)-amino-, Allylamino-, Diallylamino-, Methoxyäthylamino-, Sulfatoäthylamino-, Carboxymethylamino-, N-Methyl-N-carboxymethylamino-, Carboxyäthylamino-, N-Methyl-N-sulfomethylamino-, Sulfoäthylamino-N-methyl-N-sulfoäthylamino-, Cyclohexylamino-, Pyrrolidino-, Piperidino-, 1-Methylpiperazino-, Morpholino-, 4-Morpholinoamino-, Benzylamino-, gegebenenfalls substituiertes Phenyl- oder Naphthylamino.

Bevorzugte Farbstoffe sind solche der allgemeinen Formel (2)

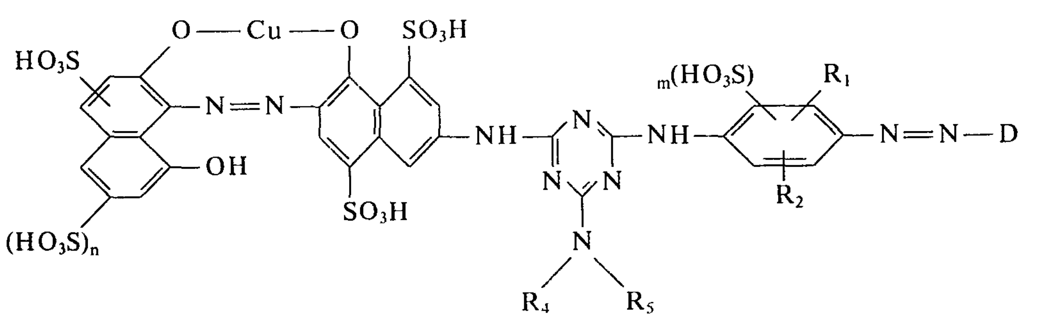

(2)

worin

D, $R_1$, $R_2$, $R_4$, $R_5$, m und n die vorstehend genannte Bedeutung haben.

Besonders bevorzugte Farbstoffe sind solche der allgemeinen Formel (2) mit

$R_4$, $R_5$ Wasserstoff oder $C_1-C_4$-Alkyl,
$R_4$ Wasserstoff oder $C_1-C_4$-Alkyl und
$R_5$ 2-Hydroxyäthyl,
$R_4$, $R_5$ 2-Hydroxyäthyl.

Ist D ein Benzolrest, so kann er beispielsweise durch Sulfo, Aminosulfonyl, Carboxy, Aminocarbonyl, $C_1-C_4$-Alkoxycarbonyl, $C_1-C_4$-Alkyl, $C_1-C_4$-Alkoxy, Halogen – insbesondere Chlor, Cyan, $C_1-C_4$-Alkylcarbonylamino-, Benzoylamino- oder Hydroxygruppen weiter substituiert sein.

Naphthalinreste D können die Azobrücke in 1- oder 2-Stellung tragen und sind vorzugsweise durch $C_1-C_4$-Alkoxy, Hydroxy sowie eine bis drei Sulfonsäuregruppen substituiert.

Ist D ein azogruppenhaltiger Rest, so entspricht er in Form der freien Säure vorzugsweise der allgemeinen Formel (3)

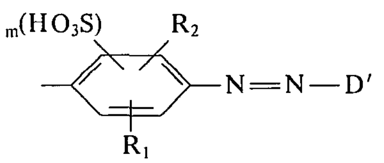 (3)

worin

m 0 oder 1 ist,

$R_1$ und $R_2$ die vorstehend genannte Bedeutung besitzen und

D' wiederum einen Benzoyl- oder Naphthalinrest bedeutet, der wie oben genannt substituiert sein kann.

Die Herstellung der erfindungsgemäßen Polyazofarbstoffe erfolgt beispielsweise durch Umsetzung eines Cyanurhalogenids mit einem aminogruppenhaltigen Azofarbstoff der Formel (4)

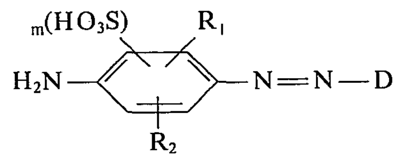 (4)

mit 2-Amino-5-hydroxynaphthalin-4,8-disulfonsäure (5)

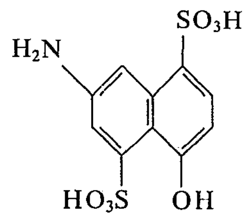 (5)

und mit einer Verbindung (6)

$$H-R_3 \qquad (6)$$

in beliebiger Reihenfolge zu einem Zwischenprodukt der Formel (7)

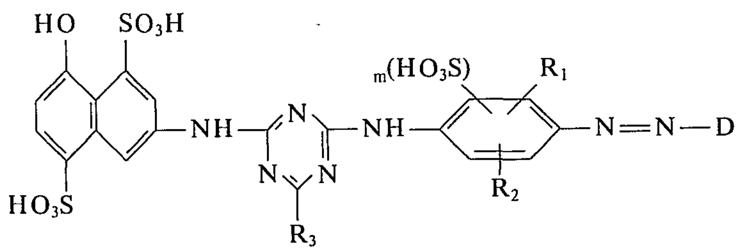 (7)

Die Umsetzung erfolgt in 3 Stufen, wobei die erste bei etwa 0–5°C die zweite bei etwa 35 bis 40°Cund die dritte bei etwa 80–100°C durchgeführt wird und die dabei entstehende Säure mit alkalischen Mitteln wie z. B. Natriumacetat, Natriumbicarbonat, Soda, Lithiumcarbonat, Lithiumhydroxid oder Natronlauge neutralisiert wird.

Es ist vorteilhaft diejenige Komponente (4), (5) oder (6), die die größte Zahl an Sulfogruppen trägt, zuerst mit dem Cyanurhalogenid umzusetzen. Die Fertigstellung zu Farbstoffen der Formel (1) erfolgt durch Diazotieren und Kuppeln von 8-Amino-1-benzosulfonyloxynaphthalin-3,5-disulfonsäure (8),

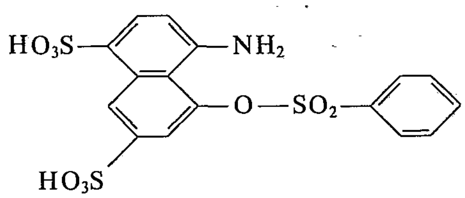 (8)

8-Amino-1-benzolsulfonyloxynaphthalin-5-sulfonsäure (9)

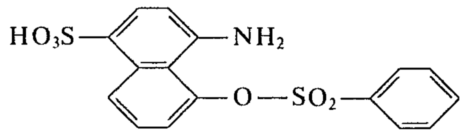

bzw. von 8-Amino-1-benzolsulfonyloxynaphthalin-3,6-disulfonsäure (10),

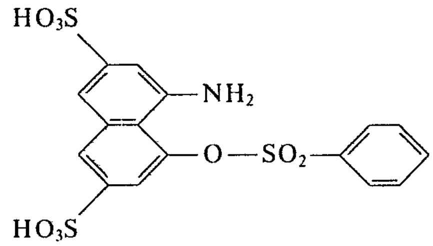

(10)

anschließender oxydativer Kupferung und Verseifung der o-Benzolsulfonylgruppe.

Die Herstellung kann variiert werden. So ist es beispielsweise möglich, die Umsetzung eines Cyanurhalogenids in dritter Stufe mit einer Verbindung (6) $H-R_3$ erst nach Kupplung der Verbindung (8), (9) bzw. (10) und oxydativer Kupferung, also vor der Verseifung des o-Benzoylsulfonylesters vorzunehmen.

Die Herstellung der aminogruppenhaltigen Azofarbstoffe der Formel (4) bzw. (4a)

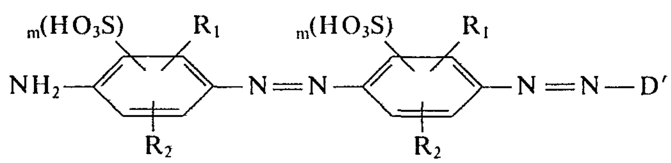

(4a)

erfolgt nach bekannten Verfahren.

Beispielsweise erhält man Farbstoffe der Formel (4) durch Diazotieren einer Verbindung

$$D-NH_2 \quad (11)$$

bzw.

$$D'-NH_2 \quad (11a)$$

und Kuppeln auf ein Anilinderivat

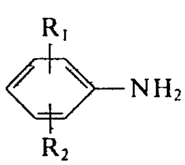

(12)

gegebenenfalls auf die entsprechende ω-Methansäure und anschließende Verseifung.

Farbstoffe der Formel (4a) werden erhalten durch Diazotieren eines Aminomonoazofarbstoffs (3) und Kuppeln auf ein Anilinderivat (12), gegebenenfalls auf die entsprechende ω-Methansäure und anschließende Verseifung.

Weitere Reaktionsschritte wie etwa Sulfieren können nach beendeter Kupplung und Verseifung der ω-Methansäure vorgenommen werden.

Selbstverständlich sind die aminogruppenhaltigen Azofarbstoffe der Formel (4) auch zu erhalten, indem man Verbindungen der Formel (13)

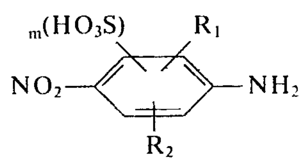

(13)

oder der Formel

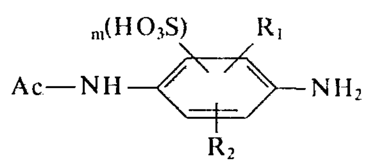

(14)

diazotiert und auf Phenol- oder Naphtholderivate der Formel (15)

$$D-OH \quad (15)$$

kuppelt, die Hydroxygruppe gegebenenfalls alkyliert und die Nitrogruppe reduziert bzw. die Acylaminogruppe verseift.

Farbstoffe der Formel (4a) werden ebenfalls erhalten, indem man Verbindungen der Formel (13) oder (14) diazotiert und auf Anilinderivate der Formel (12), gegebenenfalls auf die entsprechende ω-Methansäuren verseift, die Aminomonoazofarbstoffe

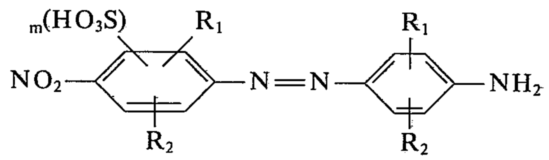

(16)

bzw.

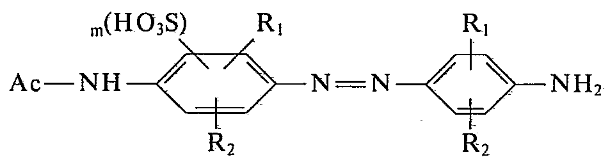

(17)

gegebenenfalls sulfiert, ferner diazotiert und auf Phenol- bzw. Naphtholderivate

$$D'—OH \qquad (15a)$$

kuppelt, die Hydroxygruppe gegebenenfalls alkyliert und die Nitrogruppe reduziert bzw. die Acylaminogruppe verseift.

Beispiele für geeignete Verbindungen der Formel (11) bzw. (11a) sind:

Anilin, 2-, 3- oder 4-Methylanilin, 2,3-, 2,5-, 2,6-, 3,4- oder 3,5-Dimethylanilin, 2-, 3- oder 4-Äthylanilin, 2-, 3- oder 4-Methoxyanilin, 4-Äthoxyanilin, 2-, 3- oder 4-(2-Hydroxyäthoxy)-anilin, 2-, 3- oder 4-(2-Methoxyäthoxy)-anilin, 2-, 3- oder 4-Chloranilin, Anilin-2-, -3- oder -4-sulfonsäureamid, Anilin-2-, -3- oder -4-sulfonsäuremethylamid, Anilin-2-, -3- oder -4-sulfonsäuredimethylamid, Anilin-2-, -3- oder -4-carbonsäure, Anilin-3,5-dicarbonsäure, Anilin-3,5-dicarbonsäure, Anilin-2-, -3- oder -4-carbonsäureamid, Anilin-2-, -3- oder -4-carbonsäuremethyl- oder -äthylester, 2-, 3- oder 4-Cyananilin, 2-, 3- oder 4-Hydroxyanilin, 3- oder 4-Acetylaminoanilin, 3- oder 4-Aminophenylharnstoff, Anilin-2-, -3- oder -4-sulfonsäure, Anilin-2,4-, -2,5- oder 3,5-disulfonsäure, 4- oder 5-Chloranilin-2-sulfonsäure, 4,6-Dichloranilin-2-sulfonsäure, 4- oder 6-Chloranilin-3-sulfonsäure, 2-Chloranilin- oder 2,5-Dichloranilin-4-sulfonsäure, 4- oder 5-Sulfo-2-aminobenzoesäure, 4-(Acetylamino- oder Methyl- oder Methoxy)-anilin-2-sulfonsäure, 3-Acetylamino-anilin-2-sulfonsäure, 2- oder 3-Methylanilin-4-sulfonsäure, 2-(Methyl- oder Methoxy)-anilin-3-sulfonsäure, 1-Naphthylamin-2-, -3-, -4-, -5-, -6-, -7- oder -8-sulfonsäure, 2-Naphthylamin-1-, -5-, -6-, -7- oder -8-sulfonsäure, 1-Naphthylamin-2,4-, -3,6-, -3,7-, -3,8-, -4,6-, -4,7-, -4,8-, -5,7- oder -6,8-disulfonsäure, 2-Naphthylamin-1,5-, -3,6-, -3,7-, -4,8-, -5,7- oder 6,8-disulfonsäure, 1-Naphthylamin-2,4,6-, -2,4,7-, -3,6,8- oder -4,6,8-trisulfonsäure, 2-Naphthylamin-1,5,7-, -3,6,8- oder 4,6,8-trisulfonsäure.

Geeignete Verbindungen der Formel (12) sind:

Anilin, 2- oder 3-Methylanilin, 2-Äthylanilin, 2,3-, 2,5-, 2,6- oder 3,5-Dimethylanilin, 2- oder 3-Methoxy- oder Äthoxyanilin, 2-Methyl-5-methoxyanilin, 2-Methoxy-5-methylanilin, 2-Äthoxy-5-methylanilin, 2,5-Dimethoxy- oder -Diäthoxyanilin, 3-Acetylaminoanilin, 3-Ureidoanilin, 3-Hydroxyacetylaminoanilin, 3-Acetylamino-6-methylanilin, 3-Acetylamino-6-methoxyanilin, 3-Ureido-6-methylanilin.

Geeignete Verbindungen der Formel (13) sind:

4-Nitroanilin, 2-Chlor- oder 3-Chlor-4-nitroanilin, 2,5-Dichlor- oder 2,6-Dichlor-4-nitroanilin, 4-Nitro-2-methylanilin, 5-Chlor-4-nitro-2-methylanilin, 2-Cyan-4-nitroanilin, 4-Nitroanilinsulfonsäure-(2) oder -(3), 4-Nitroanilincarbonsäure-(2).

Geeignete Verbindungen der Formel (14) sind:

4-Amino-acetanilid, 4-Amino-oxanilsäure, 2,5-Dichlor-4-amino-acetanilid, 2-Amino-5-acetylaminotoluol, 5-Amino-2-oxalylamino-benzolsulfonsäure, 2-Amino-5-formylamino-benzolsulfonsäure, 2-Amino-5-acetylamino-benzolsulfonsäure, 2-Amino-5-acetylamino-benzolcarbonsäure.

Phenol, 2-, 3- oder 4-Methylphenol, 1-Hydroxybenzol-2-carbonsäure, 2-, 3- oder 4-Chlorphenol, 2-Methyl-3-, -5- oder -6-chlorphenol, 3-Methyl-6-chlorphenol, 2-Äthylphenol, 2,3-, 2,5-, 2,6- oder 3,5-Dichlorphenol, 2,6-Diäthylphenol, 2-Methoxyphenol, 2-Äthoxyphenol, 3-Methoxyphenol, 3-Acetylaminophenol, 4-Hydroxydiphenyl, Phenolsulfonsäure-(2) und -(3), 1- oder 2-Naphthol, 1-Naphthol-3-, -4- oder -5-sulfonsäure, 2-Naphthol-4-, -5-, -6- oder -7-sulfonsäure, 1-Naphthol-3,6-, -3,7-, -3,8-, -4,8- oder -5,7-disulfonsäure, 2-Naphthol-3,6-, -3,7-, -4,8-, 5,7- oder -6,8-disulfonsäure, 2-Hydroxynaphthoesäure-(3), -amid, -anilid, -chloranilid oder -toluidid.

Geeignete Alkylierungsmittel zur Verätherung der phenolischen OH-Gruppen sind:

Alkylhalogenide, Alkylsulfonate, Halogenhydrine, Alkylencyanide und Alkylenoxide.

Die Farbstoffe werden aus der wäßrigen Lösung durch Aussalzen abgeschieden und getrocknet. Man erhält dunkle Farbstoffpulver, deren Alkalisalze sich in Wasser sehr gut mit grünem Farbton lösen.

Die neuen Farbstoffe färben Baumwolle und regenerierte Cellulose in vollen Farbtönen. Sie ziehen sehr gut auf und egalisieren sehr gut. Ihre Färbungen zeigen hervorragende Lichtechtheit.

## Beispiel 1

59 Teile des durch Diazotieren von 44 Teilen 2-Naphthylamin-4,8-disulfonsäure und Kuppeln auf 28 Teile Anilinomethansäure und nachfolgender Verseifung der Methansäure erhaltenen Aminomonoazofarbstoffs werden in 1000 Teilen Wasser neutral gelöst und mit Eis auf 0°C gekühlt.

27 Teile Cyanurchlorid – gelöst in Aceton – werden langsam zu der obigen Lösung getropft. Gleichzeitig wird mit verdünnter Sodalösung ein pH-Wert von 4–6 gehalten. Anschließend werden 46 Teile 2-Amino-5-hydroxynaphthalin-4,8-disulfonsäure in 200 Teilen Wasser neutral gelöst zugegeben, auf 35–50°C aufgeheizt und mit verdünnter Sodalösung pH 6 gehalten. Die Reaktion ist nach ca. 3 Stunden beendet.

Es werden 66 Teile 8-Amino-1-benzolsulfonyloxynaphthalin-3,6-disulfonsäure in 600 Teilen Wasser neutral gelöst, mit Eis auf 0°C gekühlt und mit 50 Teilen Salzsäure (30%ig) und 40 Teilen Nitritlösung (30%ig) diazotiert. Die so erhaltene Diazolösung gießt man langsam zu der obigen Lösung und hält gleichzeitig mit Sodalösung pH 7. Die Kupplung ist rasch beendet.

Nach Zugabe von 40 Teilen Kupfersulfat werden 400 Teile Wasserstoffperoxidlösung (3%ig) in 1–2 Stunden zugetropft. Es wird ausgesalzen und zwischenisoliert. Die oxydativ gekupferte Farbstoffpaste wird in 2000 Teilen Wasser neutral gelöst, mit 20 Teilen Äthanolamin versetzt und langsam auf 90–95°C erwärmt. Die Umsetzung des 3. Halogenatoms am Cyanurchlorid ist nach 1–2 Stunden beendet. Zur Verseifung des o-Benzolsulfonnylesters werden 5% Natronlauge (40%ig) zugesetzt und noch 15 Minuten bei 90–95°C gerührt. Danach wird ausgesalzen und abgesaugt. Der Farbstoff entspricht in Form der freien Säure der Formel

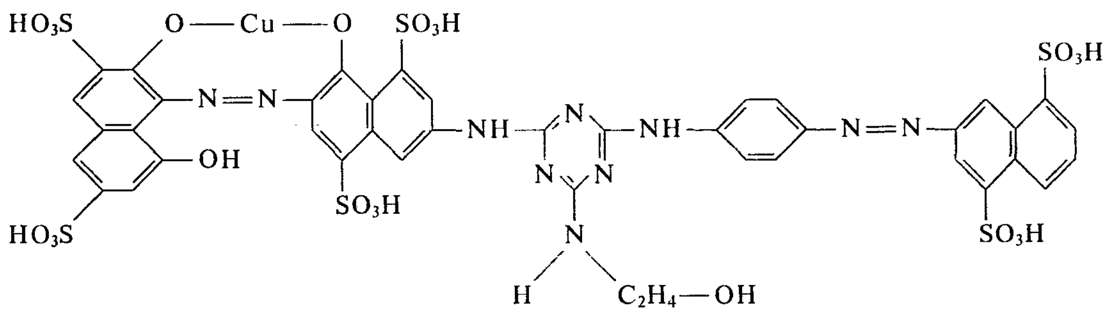

und färbt Baumwolle und Zellwolle grün.

## Beispiel 2

Ersetzt man in Beispiel 1 die 8-Amino-1-benzolsulfonyloxynaphthalin-3,6-disulfonsäure durch die äquivalente Menge 8-Amino-1-benzolsulfonyloxynaphthalin-3,5-disulfonsäure, so erhält man einen Farbstoff, der Baumwolle und Zellwolle in klaren Grüntönen färbt.

## Beispiel 3

Ersetzt man in Beispiel 1 Äthanolamin durch die äquivalente Menge Diäthanolamin oder N-Methyläthanolamin, so erhält man Farbstoffe, die Baumwolle und Zellwolle grün färben.

Beispiel 4

Ersetzt man in Beispiel 1 Äthanolamin durch Ammoniak, so erhält man einen Farbstoff, der Baumwolle und Zellwolle grün färbt.

Beispiel 5

Ersetzt man Beispiel 2 Äthanolamin durch die äquivalente Menge Diäthanolamin oder N-Methyläthanolamin, so erhält man Farbstoffe, die Baumwolle oder Zellwolle grün färben.

Beispiel 6

Ersetzt man in Beispiel 2 Äthanolamin durch Ammoniak, so erhält man einen Farbstoff, der Baumwolle und Zellwolle grün färbt.

Man erhält weitere Farbstoffe, deren Herstellung analog Beispiel 1 erfolgt, wenn man die nach der allgemeinen Formel

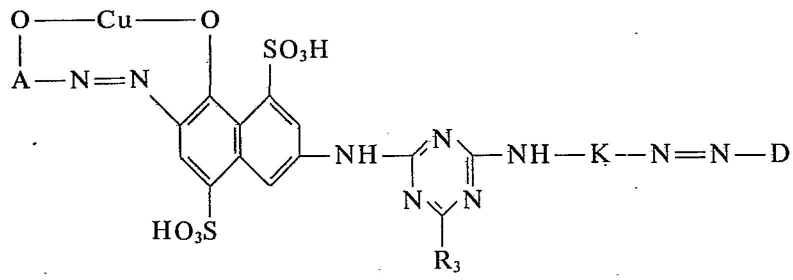

in der Tabelle angegebenen Diazokomponenten $A-NH_2$, $D-NH_2$ bzw. $NO_2-K-NH_2$, die Kupplungskomponenten $K-NH_2$ bzw. $D-OH$ sowie die Substituenten $R_3-H$ verwendet.

Tabelle I

| Bei-spiel Nr. | $A-NH_2$ | $D-NH_2$ bzw. $NO_2-K-NH_2$ | $K-NH_2$ bzw. $D-OH$ | $R_3-H$ | Farbton auf Baumwolle |
|---|---|---|---|---|---|
| 7 | 8-Amino-1-hydroxynaphthalin-3,6-disulfonsäure | 3-Aminobenzolsulfonsäure | 2-Methoxyanilin | Äthanolamin | blaugrün |
| 8 | desgl. | desgl. | desgl. | Diäthanolamin | blaugrün |
| 9 | desgl. | desgl. | desgl. | Ammoniak | blaugrün |
| 10 | desgl. | 4-Aminobenzolsulfonsäure | Anilin | Äthanolamin | blaugrün |
| 11 | desgl. | desgl. | desgl. | Diäthanolamin | blaugrün |
| 12 | desgl. | desgl. | desgl. | Ammoniak | blaugrün |
| 13 | desgl. | desgl. | 2-Methoxy-5-methylanilin | Äthanolamin | gelbgrün |
| 14 | desgl. | desgl. | desgl. | Diäthanolamin | gelbgrün |
| 15 | desgl. | desgl. | desgl. | Ammoniak | gelbgrün |
| 16 | desgl. | 4-Nitroanilin (reduziert) | 2-Hydroxybenzoesäure | Äthanolamin | blaugrün |
| 17 | desgl. | desgl. | desgl. | Diäthanolamin | blaugrün |
| 18 | desgl. | desgl. | desgl. | Ammoniak | blaugrün |

Fortsetzung

| Beispiel Nr. | $A-NH_2$ | $D-NH_2$ bzw. $NO_2-K-NH_2$ | $K-NH_2$ bzw. $D-OH$ | $R_3-H$ | Farbton auf Baumwolle |
|---|---|---|---|---|---|
| 19 | 8-Amino-1-hydroxynaphthalin-3,6-disulfonsäure | Anilin | Anilin | Äthanolamin | blaugrün |
| 20 | desgl. | desgl. | desgl. | Diäthanolamin | blaugrün |
| 21 | desgl. | desgl. | desgl. | Ammoniak | blaugrün |
| 22 | desgl. | desgl. | desgl. | Morpholin | blaugrün |
| 23 | desgl. | desgl. | desgl. | Sulfatoäthylamin | blaugrün |
| 24 | desgl. | desgl. | desgl. | Sarkosin | blaugrün |
| 25 | desgl. | desgl. | desgl. | Taurin | blaugrün |
| 26 | desgl. | desgl. | desgl. | N-Methyltaurin | blaugrün |
| 27 | desgl. | 2-Naphthylamin-4,8-disulfonsäure | 3-Methylanilin | Äthanolamin | gelbgrün |
| 28 | desgl. | desgl. | desgl. | Diäthanolamin | gelbgrün |
| 29 | desgl. | desgl. | desgl. | Ammoniak | gelbgrün |
| 30 | desgl. | desgl. | 2-Methoxyanilin | Äthanolamin | gelbgrün |
| 31 | desgl. | desgl. | desgl. | Diäthanolamin | gelbgrün |
| 32 | desgl. | desgl. | desgl. | Ammoniak | gelbgrün |
| 33 | desgl. | 1-Amino-4-(4′,6′,8′-trisulfonaphth-2′-ylazo)-benzol | Anilin | Äthanolamin | oliv |
| 34 | desgl. | desgl. | desgl. | Diäthanolamin | oliv |
| 35 | desgl. | desgl. | desgl. | Ammoniak | oliv |
| 36 | desgl. | 4-Nitroanilin (reduziert) | 4-Methylphenol | Äthanolamin | blaugrün |
| 37 | desgl. | desgl. | desgl. | Diäthanolamin | blaugrün |
| 38 | desgl. | desgl. | desgl. | Ammoniak | blaugrün |
| 39 | desgl. | 4-Aminobenzolsulfonsäure | 2-Aminobenzolsulfonsäure (nachsulfiert) | Äthanolamin | blaugrün |
| 40 | desgl. | desgl. | desgl. | Diäthanolamin | blaugrün |

Ersetzt man in den Beispielen der Tabelle I 8-Amino-1-hydroxynaphthalin-3,6-disulfonsäure durch die äquivalente Menge 8-Amino-1-hydroxynaphthalin-3,5-disulfonsäure oder 8-Amino-1-hydroxynaphthalin-5-sulfonsäure, so resultieren gleichfalls wertvolle Farbstoffe, die Baumwolle in den angegebenen Tönen färben.

Verwendet man in den Beispielen der Tabelle I für $R_3-H$ N-Methyläthanolamin, so erhält man ebenfalls wertvolle Farbstoffe, die Baumwolle in den angegebenen Tönen färben.

## Patentansprüche

1. Metallhaltige Polyazofarbstoffe der allgemeinen Formel

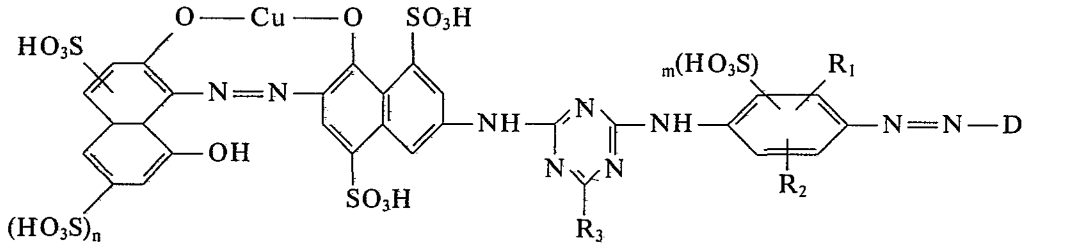

(1)

worin

D ein Rest der Benzol- oder Naphthalinreihe bedeutet,

$R_1$ und $R_2$ unabhängig voneinander Wasserstoff, $C_1$—$C_4$-Alkyl, $C_1$—$C_4$-Alkoxy, Halogen, Carboxy, Hydroxy, Acylamino oder Acyloxy bedeuten,

$R_3$ ein nicht faserreaktiver Substituent,

n 0 oder 1,

m 0 oder 1 ist.

2. Farbstoffe gemäß Anspruch 1, worin

$R_3$ eine Aminogruppe

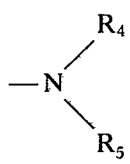

oder eine Gruppe —O—$R_6$ oder —S—$R_6$ ist,

worin

$R_4$ und $R_5$ unabhängig voneinander Wasserstoff, Amino, niedermolekulares Alkyl, Aryl, Aralkyl oder Cycloalkyl bedeuten oder zusammen, gegebenenfalls unter Einschluß eines oder mehrerer Heteroatome insbesondere Sauerstoff und/oder Stickstoff, einen Ring bilden, insbesondere einen 5- oder 6gliedrigen, und

$R_6$ für Wasserstoff, niedermolekulares Alkyl, Aryl oder Aralkyl steht.

3. Farbstoffe gemäß den Ansprüchen 1—2, worin

$R_4$, $R_6$ Wasserstoff oder $C_1$—$C_4$-Alkyl,
$R_4$ Wasserstoff oder $C_1$—$C_4$-Alkyl und
$R_5$ 2-Hydroxyäthyl,
$R_4$, $R_5$ 2-Hydroxyäthyl ist.

4. Farbstoffe gemäß den Ansprüchen 1—3, worin D ein Phenylrest ist, der gegebenenfalls durch Sulfo, Aminosulfonyl, Carboxy, Aminocarbonyl, $C_1$—$C_4$-Alkoxycarbonyl, $C_1$—$C_4$-Alkyl, $C_1$—$C_4$-Alkoxy, Halogen — insbesondere Chlor, Cyan, $C_1$—$C_4$-Alkylcarbonylamino, Benzoylamino oder Hydroxy substituiert sein kann.

5. Farbstoffe gemäß den Ansprüchen 1—3, worin D ein 1- oder 2-Naphthylrest ist, der 1 bis 3-Sulfonsäure-Gruppen enthält und durch $C_1$—$C_4$-Alkoxy und Hydroxy substituiert sein kann.

6. Farbstoffe gemäß den Ansprüchen 1—3, worin D den Rest eines Monoazofarbstoffs der allgemeinen Formel

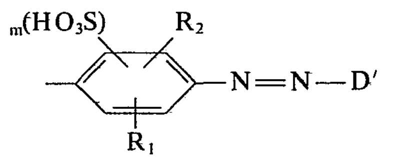

bedeutet, worin

m 0 oder 1 ist,

$R_1$ und $R_2$ die in Anspruch 1 genannte Bedeutung besitzen und

D' ein Phenyl- oder Naphthylrest gemäß den Ansprüchen 4 oder 5 ist.

7. Verfahren zur Herstellung von metallhaltigen Polyazofarbstoffen des Anspruchs 1, dadurch gekennzeichnet, daß man ein Cyanurhalogenid in beliebiger Reihenfolge mit einem Azofarbstoff der Formel

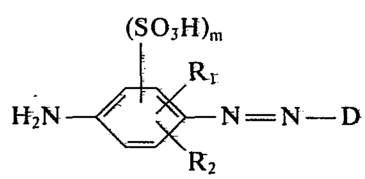

mit 2-Amino-5-hydroxynaphthalin-4,8-disulfonsäure und mit einer Verbindung $R_3$—H umsetzt, anschließend eine diazotierte 8-Amino-1-benzolsulfonyloxynaphthalin-5-sulfonsäure oder -3,5- bzw. -3,6-disulfonsäure ankuppelt, oxydativ kupfert und die o-Benzolsulfonylestergruppe verseift.

8. Verwendung der Farbstoffe gemäß den Ansprüchen 1—6 zum Färben von hydroxylgruppenhaltigen Materialien insbesondere Textilmaterialien.

## Claims

1. Metal-containing polyazo dyestuffs of the general formula

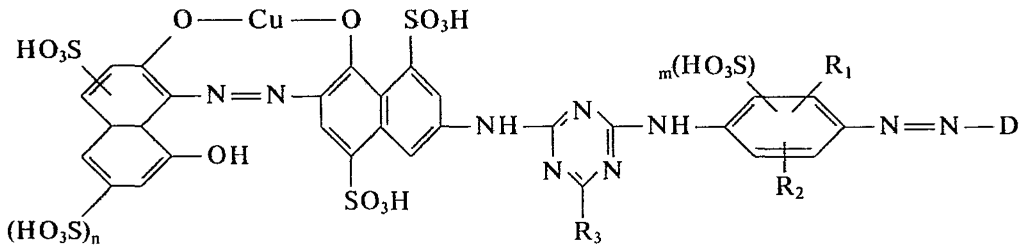

wherein

| | |
|---|---|
| D | denotes a radical of the benzene or naphthalene series, |
| $R_1$ and $R_2$ | independently of one another denote hydrogen, $C_1$—$C_4$-alkyl, $C_1$—$C_4$-alkoxy, halogen, carboxyl, hydroxyl, acylamino or acyloxy, |
| $R_3$ | is a substituent which is not fibre-reactive, |
| n | is 0 or 1, |
| m | is 0 or 1. |

2. Dyestuffs according to Claim 1, wherein

$R_3$ is an amino group

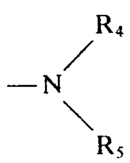

or a group —O—$R_6$ or —S—$R_6$,

wherein

| | |
|---|---|
| $R_4$ and $R_5$ | independently of one another denote hydrogen, amino, low-molecular alkyl, aryl, aralkyl or cycloalkyl, or together, optionally with the inclusion of one or more hetero-atoms, in particular oxygen and/or nitrogen, form a ring, in particular a 5-membered or 6-membered ring, and |
| $R_6$ | represents hydrogen, low-molecular alkyl, aryl or aralkyl. |

3. Dyestuffs according to Claims 1—2, wherein

| | |
|---|---|
| $R_4$ and $R_6$ | hydrogen or $C_1$—$C_4$-alkyl, |
| $R_4$ | hydrogen or $C_1$—$C_4$-alkyl and |
| $R_5$ | 2-hydroxyethyl, or |
| $R_4$ and $R_5$ | 2-hydroxyethyl. |

4. Dyestuffs according to Claims 1—3, wherein D is a phenyl radical which can optionally be substituted by sulpho, aminosulphonyl, carboxyl, aminocarbonyl, $C_1$—$C_4$-alkoxycarbonyl, $C_1$—$C_4$-alkyl, $C_1$—$C_4$-alkoxy, halogen, in particular chlorine, cyano, $C_1$—$C_4$-alkylcarbonylamino, benzoylamino or hydroxyl.

5. Dyestuffs according to Claims 1—3, wherein D is a 1- or 2-naphthyl radical which contains 1 to 3 sulphonic acid groups and can be substituted by $C_1$—$C_4$-alkoxy and hydroxyl.

6. Dyestuffs according to Claims 1—3, wherein D denotes the radical of a monoazo dyestuff, of the general formula

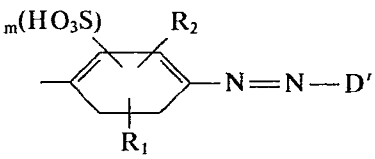

wherein

| | |
|---|---|
| m | is 0 or 1, |
| $R_1$ and $R_2$ | have the meaning given in Claim 1 and |
| D' | is a phenyl or naphthyl radical according to Claims 4 or 5. |

7. Process for the preparation of the metal-containing polyazo dyestuffs of Claim 1, characterised in that a cyanuric halide is reacted with an azo dyestuffs of the formula

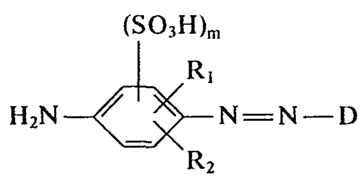

with 2-amino-5-hydroxynaphthalene-4,8-disulphonic acid and with a compound $R_3$—H, in any desired sequence, a diazotised 8-amino-1-benzenesulphonyloxynaphthalene-5-sulphonic acid or -3,5- or -3,6-disulphonic acid is then coupled on, the coupling product is subject to oxidative coppering and the o-benzenesulphonyl ester group is saponified.

8. Use of the dyestuffs according to Claims 1—6 for dyeing materials containing hydroxyl groups, in particular textile materials.

## Revendications

1. Des colorants polyazoïques renfermant un métal, de formule générale

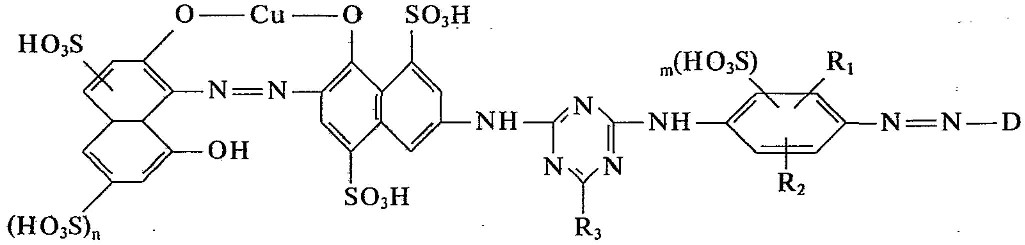

dans laquelle

- D est un reste de la série du benzène ou du naphthalène,
- $R_1$ et $R_2$ représentent, indépendamment l'un de l'autre, de l'hydrogène, un groupe alkyle en $C_1$ à $C_4$, un groupe alkoxy en $C_1$ à $C_4$, un halogène, un groupe carboxy, un groupe hydroxy, un groupe acylamino ou un groupe acyloxy, est
- $R_3$ un substituant non réactif envers la fibre,
- n est égal à 0 ou à 1,
- m est égal à 0 ou à 1.

2. Des colorants suivant la revendication 1, dans lesquels

$R_3$ est un groupe amino

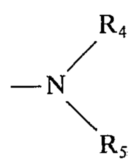

ou un groupe $-O-R_6$ ou $-S-R_6$,

où

- $R_4$ et $R_5$ représentent, indépendamment l'un de l'autre, de l'hydrogène, un groupe amino, un groupe alkyle de bas poids moléculaire, un groupe aryle, un groupe aralkyle ou un groupe cycloalkyle ou forment ensemble un noyau, notamment un noyau pentagonal ou hexagonal, comportant éventuellement un ou plusieurs hétéro-atomes notamment d'oxygène et/ou d'azote, et
- $R_6$ est l'hydrogène, un groupe alkyle de bas poids moléculaire, un groupe aryle ou un groupe aralkyle.

3. Des colorants suivants les revendications 1 et 2, dans lesquels

- $R_4$, $R_6$ hydrogène ou groupe alkyle en $C_1$ à $C_4$,
- $R_4$ hydrogène ou groupe alkyle en $C_1$ à $C_4$ et
- $R_5$ groupe 2-hydroxyéthyle,
- $R_4$, $R_5$ groupe 2-hydroxyéthyle.

4. Des colorants suivant les revendications 1 à 3, dans lesquels D est un reste phényle qui peut éventuellement être substitué par un groupe sulfo, un groupe aminosulfonyle, un groupe carboxy, un groupe aminocarbonyle, un groupe (alkoxy en $C_1$ à $C_4$)-carbonyle, un groupe alkyle en $C_1$ à $C_4$, un groupe alkoxy en $C_1$ à $C_4$, un halogène, notamment le chlore, un groupe cyano, un groupe (alkyle en $C_1$ à $C_4$)-carbonylamino, un groupe benzoylamino ou un groupe hydroxy.

5. Des colorants suivant les revendications 1 à 3, dans lesquels D est un reste 1- ou 2-naphthyle qui comprend 1 à 3 groupes acide sulfonique et qui peut être substitué par un radical alkoxy en $C_1$ à $C_4$ et un radical hydroxy.

6. Des colorants suivant les revendications 1 à 3, dans lesquels D est le reste d'un colorant mono-azoïque des formule générale

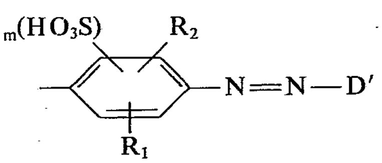

dans laquelle

- m est égal à 0 ou à 1,
- $R_1$ et $R_2$ ont la définition donnée dans la revendication 1, et
- D' est un reste phényle ou naphthyle suivant la revendication 4 ou 5.

7. Procédé de production de colorants polyazoïques renfermant un métal suivant la revendication 1, caractérisé en ce qu'il consiste à faire réagir un halogénure de cyanuryle dans un ordre quelconque avec un colorant azoïque de formule

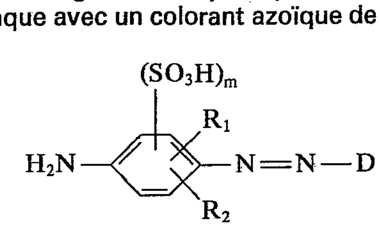

avec l'acide 2-amino-5-hydroxynaphthalène-4,8-disulfonique et avec un composé $R_3-H$, puis

à fixer par copulation un acide 8-amino-1-benzènesulfonyloxynaphthalène-5-sulfonique ou -3,5- ou -3,6-disulfonique diazoté, à introduire du cuivre par oxydation et à saponifier le groupe ester de o-benzènesulfonyle.

8. Utilisation des colorants suivant les revendications 1 à 6, dans la teinture de matières portant des groupes hydroxyle, notamment des matières textiles.